# EUROPÄISCHE PATENTSCHRIFT

(11) **EP 3 550 685 B1**
(45) Veröffentlichungstag und Bekanntmachung des Hinweises auf die Patenterteilung: **22.12.2021**
(21) Anmeldenummer: 18305411.3
(22) Anmeldetag: 06.04.2018
(51) Int. Cl.: H02G 5/02

(54) **SAMMELSCHIENENTRÄGER**
BUSBAR SUPPORT
SUPPORT DE BARRES DE DISTRIBUTION

(43) Veröffentlichungstag der Anmeldung: 09.10.2019
(73) Patentinhaber: Hager Industrie AG, 6020 Emmenbrücke (CH)
(72) Erfinder: HAUSER, Felix, 6034 INWIL (CH); SCHERZINGER, Stefan, 6130 WILLISAU (CH); SHOSHI, Fatmir, 6285 HITZKIRCH (CH); VOGEL, Patrick, 6005 LUZERN (CH)
(74) Vertreter: Pollard, Peter Julian

(56) Entgegenhaltungen:
- FR-A- 1 559 497
- FR-A1- 2 771 862
- US-A1- 2017 125 992

## Beschreibung

Die Erfindung betrifft einen Sammelschienenträger für einen Verteilerschrank, insbesondere einen Niederspannungsverteilerschrank.

Aus dem Stand der Technik bekannte Sammelschienenträger sind in der Regel mit einer Trägerbasis versehen, die wenigstens einen Aufnahmeabschnitt zur Aufnahme eines Teilstücks einer Sammelschiene und einen Befestigungsabschnitt zur Befestigung des Sammelschienenträgers an einem Befestigungsbereich des Verteilerschranks umfasst. Ein solcher Befestigungsabschnitt kann beispielsweise durch mehrere Öffnungen gebildet sein und der Sammelschienenträger mittels Schrauben an den Befestigungsbereich befestigbar sein.

Zur Fixierung der Sammelschiene an dem Sammelschienenträger wird in der Regel zu beiden Seiten des Sammelschienenträgers an jeder Sammelschiene jeweils eine Klemme angebracht, die kraftschlüssig mit der Sammelschiene verbunden wird. Dadurch wird das Teilstück der Sammelschiene formschlüssig in dem Aufnahmeabschnitt gehalten. Eine solche Fixierung ist jedoch relativ umständlich und mit einem relativ hohen Arbeitsaufwand für einen Installateur verbunden.

Die Druckschrift FR155497 zeigt einen zweiteiligen Sammelschienenträger mit einem Unterteil und einem Oberteil. In einem Randbereich des Sammelschienenträgers wird zwischen Ober- und Unterteil eine Kante einer Sammelschiene eingeklemmt. Ober- und Unterteil werden mittels einer Schraube gemeinsam an einem Rahmen fixiert. Zur Befestigung einer Sammelschiene werden an jedem Ende zwei der bekannten Sammelschienenträger benötigt.

Die Druckschrift FR 2771862 A1 zeigt einen Sammelschienenträger, bei dem Sammelschienen zwischen zwei Klemmbacken eingeklemmt werden. Die zunächst separierten Klemmbacken sind so gestaltet, dass sie seitlich von den Sammelschienen formschlüssig teleskopartig ineinandergreifen, und werden mittels Schrauben zu beiden Seiten der zwischen ihnen aufgenommenen Sammelschienen miteinander verbunden. Die Schrauben können auch dazu dienen, die Klemmbacken an einem Rahmen zu fixieren.

Die Druckschrift US2017/0125992 A1 zeigt einen Sammelschienenträger mit einem kragenförmigen Abschnitt, der in eine entsprechende Öffnung eines Verteilerschranks eingeschoben werden kann. Der Sammelschienenträger wird mittels zweier Schrauben an dem Verteilerschrank fixiert. In den kragenförmigen Abschnitt des bekannten Sammelschienenträgers kann eine Sammelschiene eingeschoben werden. Die Fixierung der Sammelschiene im Sammelschienenträger erfolgt durch Rastnasen am kragenförmigen Teil des Sammelschienenträgers, die in an der Sammelschiene vorgesehene Ausnehmungen eingreifen.

Es ist die Aufgabe der vorliegenden Erfindung, einen Sammelschienenträger bereit zu stellen, der sich in einfacher und zeitsparender Weise in einem Verteilerschrank installieren lässt und mittels welchem Sammelschienen in einfacher und zeitsparender Weise in dem Verteilerschrank montiert werden können. Es ist eine weitere Aufgabe der vorliegenden Erfindung, einen Verteilerschrank bereit zu stellen, in welchem sich Sammelschienen in einfacher und zeitsparender Weise installieren lassen. Es ist eine weitere Aufgabe der vorliegenden Erfindung, ein Verfahren zur Montage einer Sammelschiene in einen Verteilerschrank vorzuschlagen, mittels welchem sich die Sammelschiene in einfacher und zeitsparender Weise montieren lässt.

Die Aufgabe wird durch einen Sammelschienenträger nach Anspruch 1, einen Verteilerschrank nach Anspruch 12 und ein Verfahren zur Montage einer Sammelschiene nach Anspruch 14 gelöst.

Der erfindungsgemäße Sammelschienenträger für einen Verteilerschrank, insbesondere einen Niederspannungsverteilerschrank, ist mit einer Trägerbasis versehen, die wenigstens einen Aufnahmeabschnitt zur Aufnahme eines Teilstücks einer Sammelschiene und einen Befestigungsabschnitt zur Befestigung des Sammelschienenträgers an einem Befestigungsbereich des Verteilerschranks umfasst. Der erfindungsgemäße Sammelschienenträger umfasst ferner ein Fixierungselement, welches zwischen einer ersten Position, in welcher der Sammelschienenträger an den Befestigungsbereich anlegbar ist, einer zweiten Position, in welcher die Sammelschiene in den Aufnahmeabschnitt einführbar ist, und einer dritten Position, in welcher die Sammelschiene in dem Aufnahmeabschnitt fixierbar ist, relativ zur Trägerbasis bewegbar ist.

Diese Ausgestaltung ermöglicht eine einfache und zeitsparende Fixierung der Sammelschiene in dem Aufnahmeabschnitt.

In einer bevorzugten Ausgestaltung ist die Sammelschiene in der dritten Position durch das Fixierungselement kraftschlüssig in dem Aufnahmeabschnitt fixierbar.

Vorzugsweise umfasst das Fixierungselement einen an der Trägerbasis anliegenden oder an den Befestigungsbereich anlegbaren Keilabschnitt, wobei vorzugsweise der Keilabschnitt in der zweiten Position an den Befestigungsbereich anlegbar ist, um den Sammelschienenträger formschlüssig in dem Befestigungsbereich zu halten.

Diese Ausgestaltung ermöglicht eine einfache und zeitsparende Befestigung des Sammelschienenträgers an dem Befestigungsbereich.

In einer bevorzugten Ausgestaltung liegt der Keilabschnitt zwischen der zweiten Position und der dritten Position an der Trägerbasis an und/oder an dem Befestigungsbereich an.

Durch diese Ausgestaltung kann das Fixierungselement in einfacher Weise in die dritte Position geführt werden.

Gemäß der Erfindung ist der Keilabschnitt in der dritten Position an den Befestigungsbereich anlegbar, um den Sammelschienenträger kraft- und/oder formschlüssig in dem Befestigungsbereich zu halten.

Diese Ausgestaltung ermöglicht die Befestigung des Sammelschienenträgers an dem Befestigungsbereich und die Fixierung der Sammelschiene in dem Aufnahmeabschnitt mit einem Arbeitsschritt, wodurch eine einfache und zeitsparende Befestigung des Sammelschienenträgers an dem Befestigungsbereich möglich ist.

In einer bevorzugten Ausgestaltung ist das Fixierungselement durch eine kombinierte Translations- und Rotationsbewegung zwischen der zweiten Position und der dritten Position verschwenkbar.

Vorzugsweise weist die Trägerbasis eine durchgehende Öffnung auf und das Fixierungselement umfasst eine Bohrung und eine in der Bohrung aufgenommene und durch die Öffnung geführte Schraube.

Diese Ausgestaltung ermöglicht es, das Fixierungselement in einfacher Weise von der zweiten Position in die dritte Position zu überführen.

In einer bevorzugten Ausgestaltung weitet sich die Öffnung in Richtung eines Kopfes der Schraube.

Diese Ausgestaltung ermöglicht ein einfaches Zentrieren des Fixierungselements in die dritte Position durch Drehen der Schraube.

Vorzugsweise umfasst die Öffnung eine Senkung, in welcher ein Kopf der Schraube aufgenommen ist.

In einer bevorzugten Ausgestaltung ist die Bohrung eine Sackloch-Bohrung.

Vorzugsweise umfasst die Schraube ein selbstschneidendes Gewinde, wobei weiterhin vorzugsweise die Schraube in einen Anfangsbereich der Bohrung zur Vormontage eingeschraubt ist.

Diese Ausgestaltung erleichtert die Montage des Sammelschienenträgers.

In einer bevorzugten Ausgestaltung weist das Fixierungselement wenigstens eine Fixierungsfläche auf, die in der dritten Position an das Teilstück der Sammelschiene anlegbar ist, um die Sammelschiene in der dritten Position in dem Aufnahmeabschnitt zu fixieren.

Diese Ausgestaltung ermöglicht eine sichere Fixierung der Sammelschiene in dem Aufnahmeabschnitt.

Die Erfindung betrifft ferner einen Verteilerschrank, insbesondere einen Niederspannungsverteilerschrank, mit einem wenigstens einen Befestigungsbereich aufweisenden Traggerüst, wenigstens einer Sammelschiene und wenigstens einem erfindungsgemäßen Sammelschienenträger. Der Sammelschienenträger ist an dem Befestigungsbereich befestigt. Das Teilstück der wenigstens einen Sammelschiene ist in dem Aufnahmeabschnitt aufgenommen. Das Fixierungselement nimmt die dritte Position ein und fixiert die Sammelschiene in dem Aufnahmeabschnitt.

Vorzugsweise umfasst das Traggerüst wenigstens einen Träger und der Befestigungsbereich ist durch eine in dem Träger eingebrachte Befestigungsöffnung gebildet.

Letztlich betrifft die Erfindung ein Verfahren zur Montage einer Sammelschiene in einen Verteilerschrank. Das Verfahren umfasst folgende Verfahrensschritte:
a) Bereitstellen eines Verteilerschranks, insbesondere eines Niederspannungsverteilerschranks, mit einem wenigstens einen Befestigungsbereich aufweisenden Traggerüst;
b) Bereitstellen wenigstens eines erfindungsgemäßen Sammelschienenträgers;
c) Bereitstellen wenigstens einer Sammelschiene;
d) Anlegen des Sammelschienenträgers an den Befestigungsbereich; und
e) Einführen der Sammelschiene in den Aufnahmeabschnitt.
   Das erfindungsgemäße Verfahren ist dadurch gekennzeichnet, dass während des Einführens der Sammelschiene das Fixierungselement die zweite Position einnimmt, und dadurch gekennzeichnet, dass es ferner folgenden weiteren Verfahrensschritt umfasst:
f) Bewegen des Fixierungselements in dritte Position, um die Sammelschiene in dem Aufnahmeabschnitt zu fixieren.

Das erfindungsgemäße Verfahren ermöglicht eine vereinfachte und zeitsparende Montage des Verteilerschranks.

In einer bevorzugten Ausgestaltung wird die Sammelschiene kraftschlüssig in dem Aufnahmeabschnitt fixiert.

Erfindungsgemäss bewirkt das Bewegen des Fixierungselements in die dritte Position zugleich ein kraft- und/oder formschlüssiges Halten des Sammelschienenträgers in dem Befestigungsbereich.

Durch diese Ausgestaltung kann bei der Montage des Verteilerschranks weiter Zeit gespart werden.

In einer bevorzugten Ausgestaltung wird nach dem Anlegen des Sammelschienenträgers an den Befestigungsbereich und vor dem Einführen der Sammelschiene in den Aufnahmeabschnitt das Fixierungselement in die zweite Position bewegt, wobei vorzugsweise dabei der Sammelschienenträger in dem Befestigungsbereich vorfixiert wird, weiterhin vorzugsweise durch Anlegen des Keilabschnitts an den Befestigungsbereich vorfixiert wird.

Durch die Vorfixierung des Sammelschienenträgers in dem Befestigungsbereich wird die Montage des Verteilerschranks erleichtert.

Vorzugsweise bewirkt das Drehen der Schraube des Fixierungselements das Bewegen des Fixierungselements in dritte Position, um die Sammelschiene in dem Aufnahmeabschnitt zu fixieren.

Diese Ausgestaltung erleichtert weiterhin die Montage des Verteilerschranks.

Einzelheiten und weitere Vorteile des erfindungsgemäßen Sammelschienenträgers, des erfindungsgemäßen Verteilerschranks und des erfindungsgemäßen Verfahrens zur Montage einer Sammelschiene in einen Verteilerschrank werden anhand der nachfolgend beschriebenen Ausführungsbeispiele erläutert. Dabei veranschaulichen im Einzelnen:
Fig. 1 und 2: perspektivische Ansichten eines Sammelschienenträgers des Standes der Technik;
Fig. 3: eine perspektivische Ansicht eines Sammelschienenträgers nach einem ersten Ausführungsbeispiel, wobei ein Fixierungselement des Sammelschienenträgers eine erste Position einnimmt;
Fig. 4 und 5: perspektivische Ansichten des Sammelschienenträgers nach dem ersten Ausführungsbeispiel, wobei das Fixierungselement des Sammelschienenträgers eine zweite Position einnimmt;
Fig. 6 und 7: perspektivische Ansichten des Sammelschienenträgers nach dem ersten Ausführungsbeispiel, wobei das Fixierungselement des Sammelschienenträgers eine dritte Position einnimmt;
Fig. 8: einen durch die Sammelschiene verlaufenden Längsschnitt des Sammelschienenträgers nach dem ersten Ausführungsbeispiel, wobei das Fixierungselement die zweite Position einnimmt;
Fig. 9: einen durch eine Schraube des Fixierungselements verlaufenden Längsschnitt des Sammelschienenträgers nach dem ersten Ausführungsbeispiel, wobei das Fixierungselement die zweite Position einnimmt;
Fig. 10: einen durch die Sammelschiene verlaufenden Längsschnitt des Sammelschienenträgers nach dem ersten Ausführungsbeispiel, wobei das Fixierungselement die dritte Position einnimmt;
Fig. 11: einen durch die Schraube verlaufenden Längsschnitt des Sammelschienenträgers nach dem ersten Ausführungsbeispiel, wobei das Fixierungselement die dritte Position einnimmt;

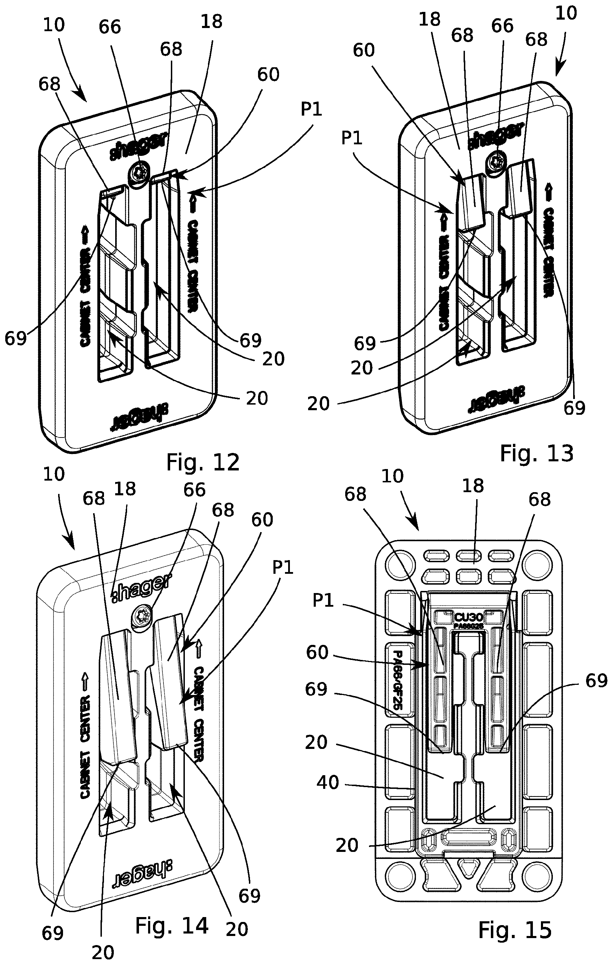

Fig. 12: eine perspektivische Ansicht des Sammelschienenträgers nach einem zweiten Ausführungsbeispiel;
Fig. 13: eine perspektivische Ansicht des Sammelschienenträgers nach einem dritten Ausführungsbeispiel;
Fig. 14: eine perspektivische Ansicht des Sammelschienenträgers nach einem vierten Ausführungsbeispiel;
Fig. 15: eine Rückansicht des Sammelschienenträgers nach dem vierten Ausführungsbeispiel;

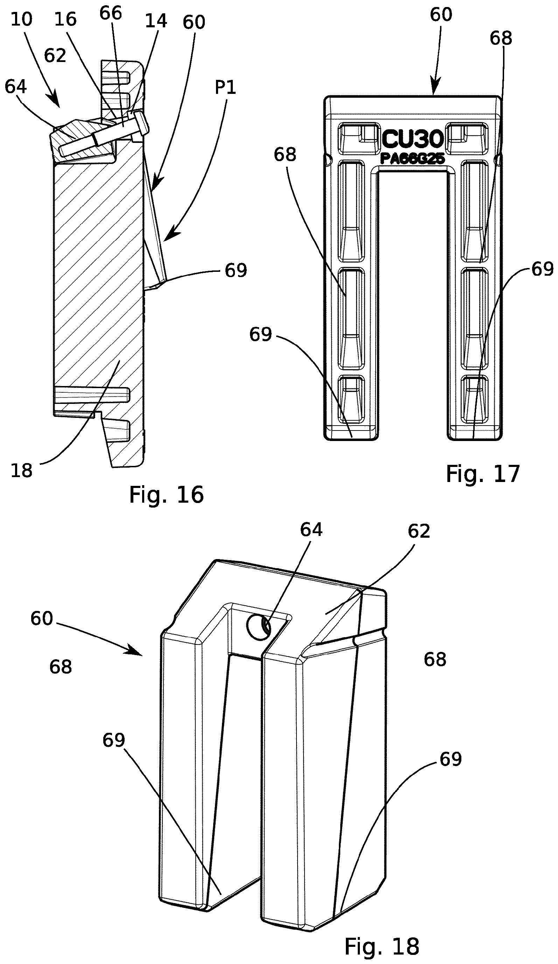

Fig. 16: einen durch die Schraube verlaufenden Querschnitt des Sammelschienenträgers nach dem vierten Ausführungsbeispiel, wobei das Fixierungselement die erste Position einnimmt;
Fig. 17 und 18: Ansichten des Fixierungselements des Sammelschienenträgers nach dem vierten Ausführungsbeispiel;

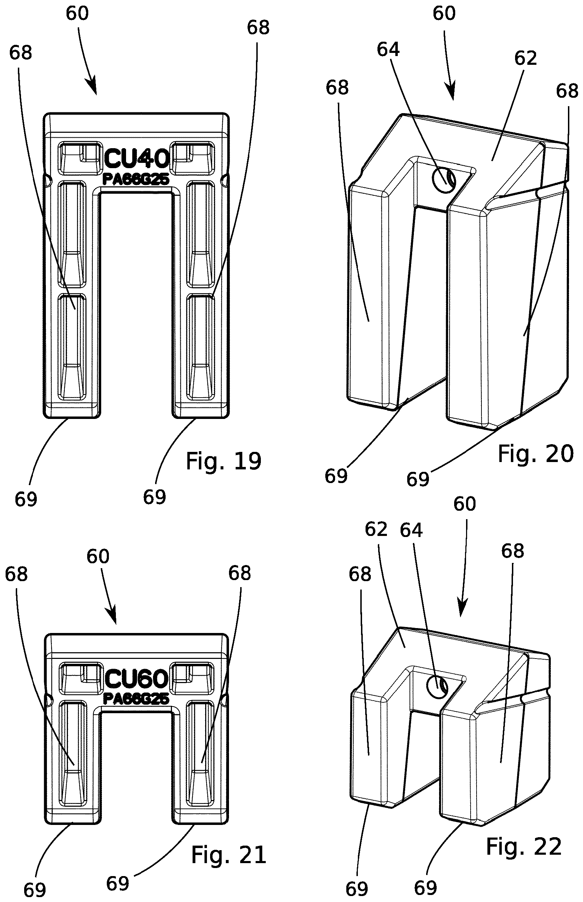

Fig. 19 und 20: Ansichten des Fixierungselements des Sammelschienenträgers nach dem ersten Ausführungsbeispiel;
Fig. 21 und 22: Ansichten des Fixierungselements des Sammelschienenträgers nach dem dritten Ausführungsbeispiel;
Fig. 23 und 24: Ansichten des Fixierungselements des Sammelschienenträgers nach dem zweiten Ausführungsbeispiel;
Fig. 25: einen durch die Sammelschiene verlaufenden Längsschnitt des Sammelschienenträgers nach dem zweiten Ausführungsbeispiel, wobei das Fixierungselement die zweite Position einnimmt;
Fig. 26: einen durch die Schraube verlaufenden Längsschnitt des Sammelschienenträgers nach dem zweiten Ausführungsbeispiel, wobei das Fixierungselement die zweite Position einnimmt;
Fig. 27: einen durch die Sammelschiene verlaufenden Längsschnitt des Sammelschienenträgers nach dem zweiten Ausführungsbeispiel, wobei das Fixierungselement die dritte Position einnimmt;
Fig. 28: einen durch die Schraube verlaufenden Längsschnitt des Sammelschienenträgers nach dem zweiten Ausführungsbeispiel, wobei das Fixierungselement die dritte Position einnimmt;
Fig. 29: eine perspektivische Ansicht eines anmeldungsgemäßen Verteilerschranks; und
Fig. 30 bis 35: eine Veranschaulichung eines Verfahrens zur Montage einer Sammelschiene in einen Verteilerschrank.

Die Anmeldung betrifft einen Sammelschienenträger 10 für einen Verteilerschrank 100, insbesondere einen Niederspannungsverteilerschrank. Der Sammelschienenträger 10 ist mit einer Trägerbasis 18 versehen, die wenigstens einen Aufnahmeabschnitt 20 zur Aufnahme eines Teilstücks einer Sammelschiene 110 und einen Befestigungsabschnitt 40 zur Befestigung des Sammelschienenträgers 10 an einem Befestigungsbereich 122 des Verteilerschranks 100 umfasst.

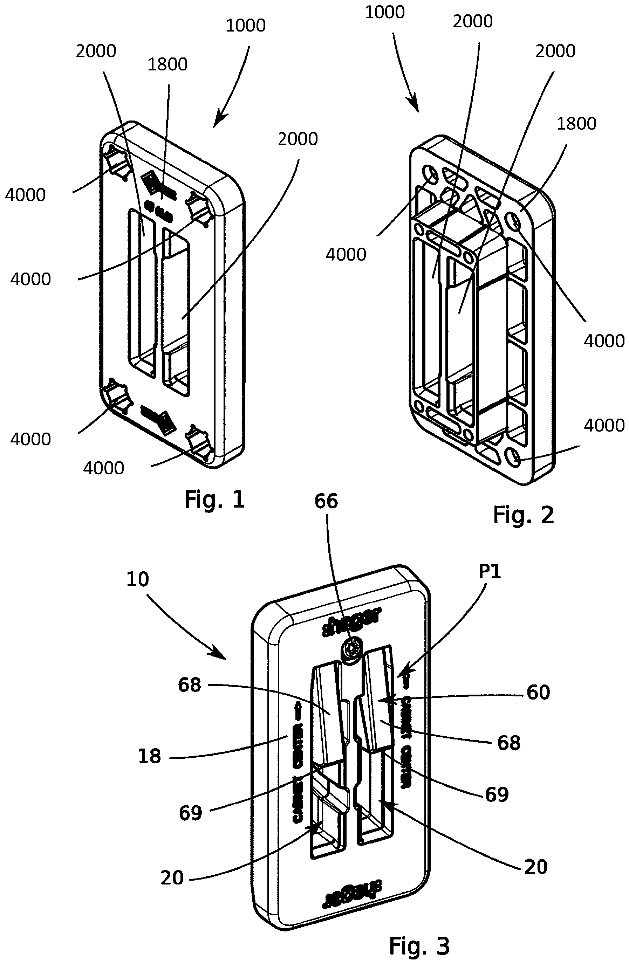

Die Figuren 1 und 2 zeigen einen Sammelschienenträger 1000 des Standes der Technik. Der Sammelschienenträger 1000 ist mittels vierer Löcher 4000 und dazugehöriger Schrauben an einem Befestigungsbereich eines Verteilerschranks befestigbar. Der Sammelschienenträger 1000 umfasst zwei Aufnahmeabschnitte 2000, die zur Aufnahme eines Teilstücks einer Sammelschiene dienen. Die Sammelschiene weist eine vorbestimmte Breite auf. Der in den Figuren 1 und 2 gezeigte Sammelschienenträger 1000 ist zur Montage von Sammelschienen mit einer Breite von 80 mm ausgebildet.

Zur Fixierung der Sammelschiene an dem Sammelschienenträger 106 des Standes der Technik wird zu beiden Seiten des Sammelschienenträgers 1000 an jeder Sammelschiene jeweils eine Klemme angebracht (nicht in den Figuren wiedergegeben), die kraftschlüssig mit der Sammelschiene verbunden wird. Dadurch wird ein Teilstück der Sammelschiene formschlüssig in dem Aufnahmeabschnitt 2000 gehalten. Eine solche Fixierung ist relativ umständlich und mit einem relativ hohen Arbeitsaufwand für einen Installateur verbunden.

Die Sammelschienenträger 10 nach allen Ausführungsbeispielen umfassen jeweils ein Fixierungselement 60, welches zwischen einer ersten Position PI, in welcher der Sammelschienenträger 10 an den Befestigungsbereich 122 anlegbar ist, einer zweiten Position P2, in welcher die Sammelschiene 110 in den Aufnahmeabschnitt 20 einführbar ist, und einer dritten Position P3, in welcher die Sammelschiene 110 in dem Aufnahmeabschnitt 20 fixierbar ist, relativ zur Trägerbasis 18 bewegbar ist.

Der Sammelschienenträger 10 nach allen Ausführungsbeispielen kann zwei Aufnahmeabschnitte 20 umfassen, die durch einen Steg voneinander getrennt sein können. Der Steg kann mit Aussparungen versehen sein, die in einen der Aufnahmeabschnitte 20 münden. Die Aufnahmeabschnitte 20 sind zur Aufnahme eines Teilstücks jeweils einer Sammelschiene 110 ausgebildet. Der Sammelschienenträger 10 kann also zur Montage eines Paares Sammelschienen 110 dienen. Die Sammelschiene 110 verlaufen in Richtung einer Erstreckungsrichtung R.

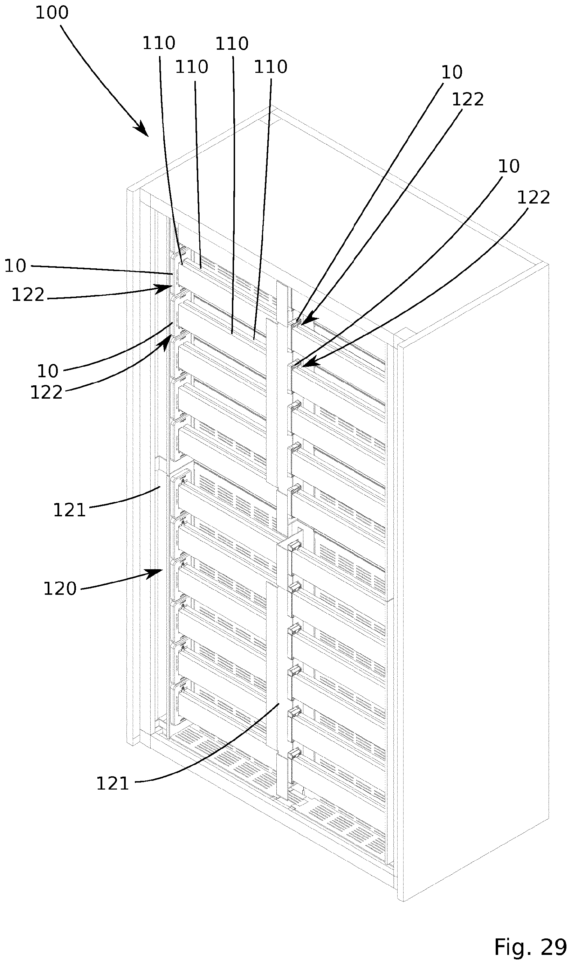

Figur 29 zeigt einen Verteilerschrank 100 gemäß der Anmeldung, mit einem wenigstens einen Befestigungsbereich 122 aufweisenden Traggerüst 120, wenigstens einer Sammelschiene 110 und wenigstens einem Sammelschienenträger 10. In dem Verteilerschrank 100 verlaufen mehrere übereinander angeordnete Sammelschienenpaare, diejeweils mittels dreier Sammelschienenträger 10 an dem Traggerüst montiert sind. Aus Gründen der Übersichtlichkeit sind nur einige Sammelschienenträger 10 und Sammelschienen 110 in Figur 29 mit Bezugszeichen versehen.

Die Sammelschienenträger 10 sind an dem Befestigungsbereich 122 befestigt. Das Teilstück der Sammelschiene 110 ist in dem Aufnahmeabschnitt 20 aufgenommen. Das Fixierungselement 60 nimmt die dritte Position P3 ein und fixiert die Sammelschiene 110 in dem Aufnahmeabschnitt 20.

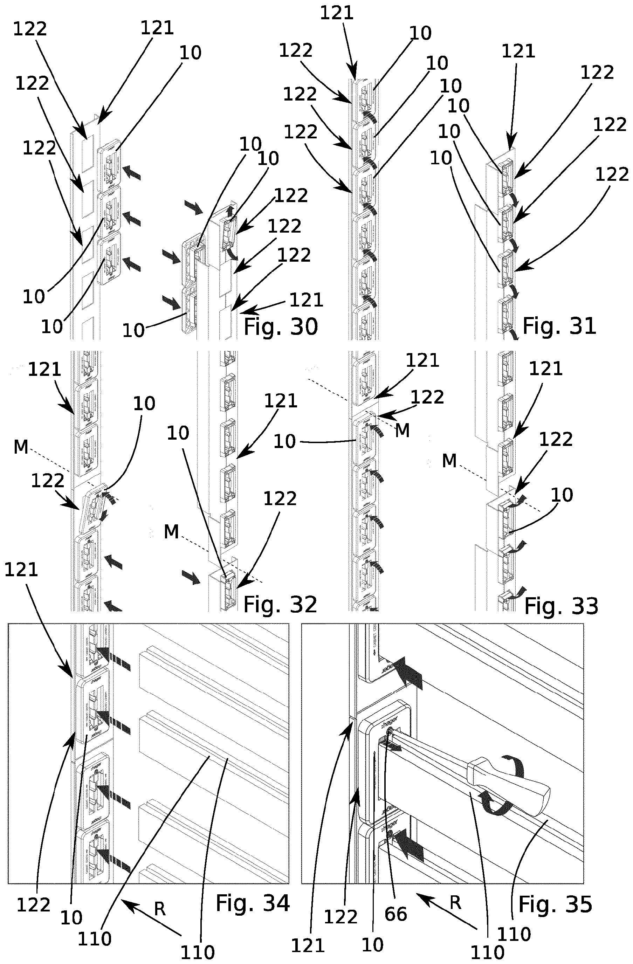

Das Traggerüst 120 kann wenigstens einen Träger 121 umfassen und der Befestigungsbereich 122 kann durch eine in dem Träger 121 eingebrachte Befestigungsöffnung gebildet sein. Wie weiterhin insbesondere in Figur 30 zu erkennen ist, kann die Befestigungsöffnung die Form eines Rechtecks aufweisen.

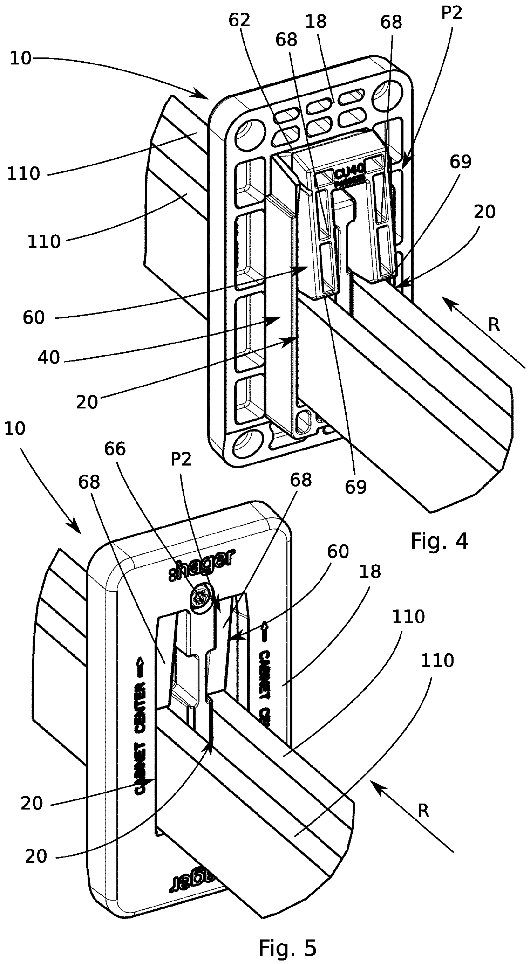

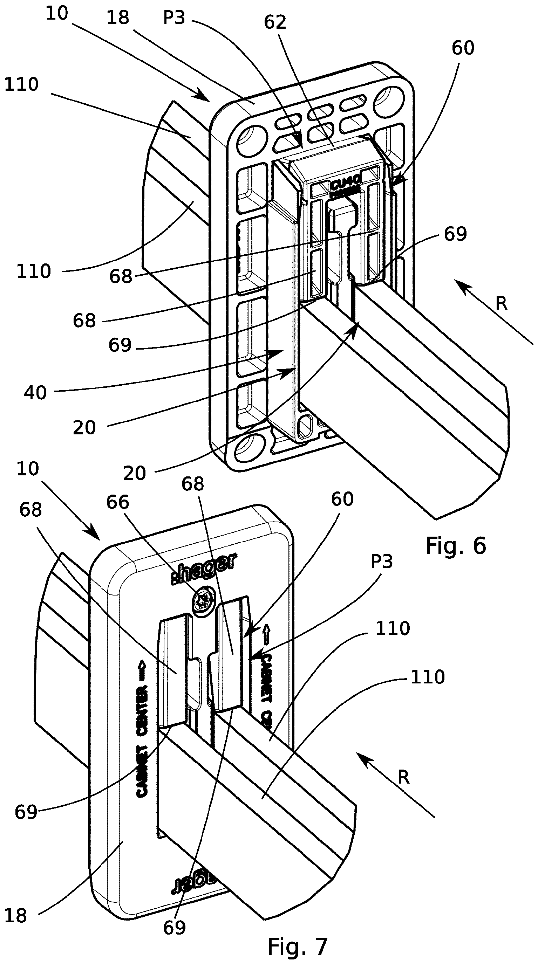

Der Befestigungsabschnitt 40 kann kragenförmig, insbesondere mit einem rechteckförmigen Querschnitt ausgebildet sein, wie beispielsweise in den Figuren 4 und 6 gezeigt.

Das Fixierungselement 60 der Sammelschienenträger 10 nach den verschiedenen Ausführungsbeispielen kann je zwei Fixierungsabschnitte 68 umfassen. Jeder Fixierungsabschnitt 68 kann dabei zur Fixierung einer Sammelschiene 110 in dem Aufnahmeabschnitt 20 dienen und in den Aufnahmeabschnitt 20 hineinragen. So kann bei Vorhandensein zweier Aufnahmeabschnitte 20 das Fixierungselement 60 zur Fixierung eines Paares Sammelschienen 110 dienen.

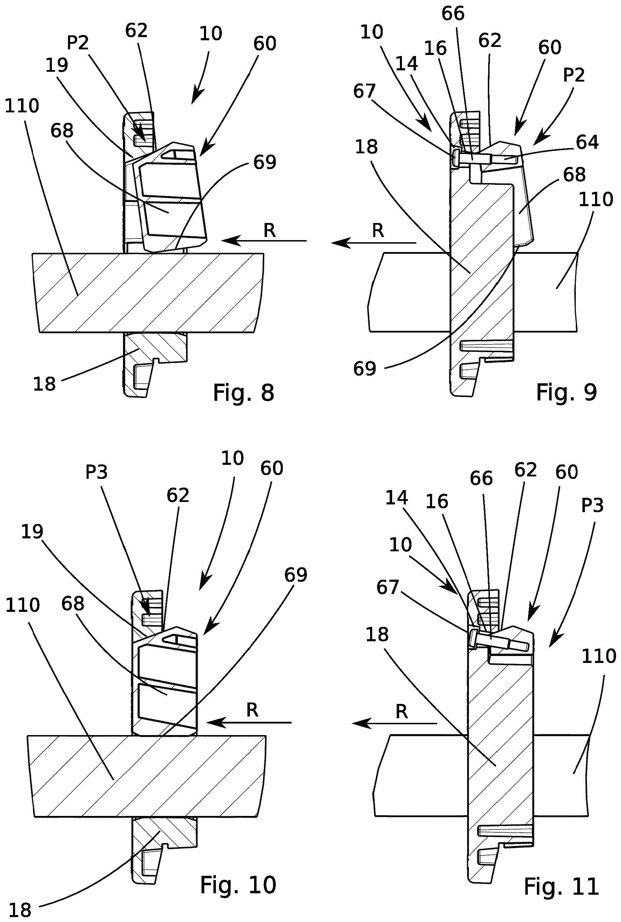

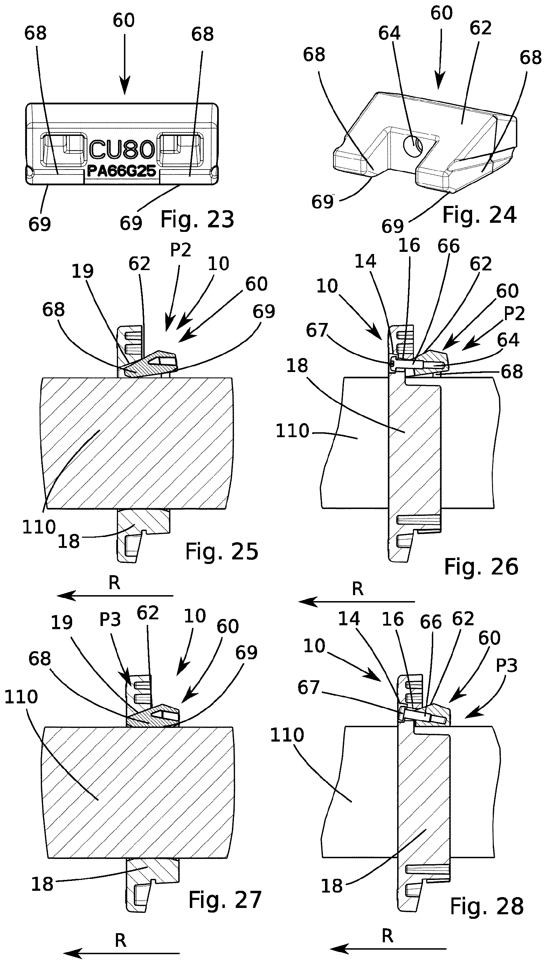

Jeder Fixierungsabschnitt 68 kann eine Fixierungsfläche 69 aufweisen, die in der dritten Position P3 an dem Teilstück der Sammelschiene 110 anliegt, um die Sammelschiene 110 in der dritten Position P3 in dem Aufnahmeabschnitt 20 zu fixieren. Die Fixierungsfläche 69 kann zu beiden Seiten gefast sein, wie insbesondere in den Figuren 8, 10, 25 und 27 zu erkennen ist. Eine in der dritten Position P3 an dem Teilstück der Sammelschiene 110 anliegende Fixierungsfläche 69 ist dabei in den Figuren 10 und 27 wiedergegeben.

Die unterschiedlichen Ausführungsbeispiele des Sammelschienenträgers 10 unterscheiden sich durch die Form des Fixierungselements 60. Die Trägerbasis 18 ist für sämtliche Ausführungsbeispiele gleich ausgestaltet.

Durch die unterschiedlich ausgestalteten Fixierungselemente 60 kann der Sammelschienenträger 10 zur Aufnahme von Sammelschienen 110 unterschiedlicher Breite ausgebildet werden. So können in dem Sammelschienenträger 10 nach dem ersten Ausführungsbeispiel Sammelschienen 110 mit einer Breite von 40 mm, in dem Sammelschienenträger 10 nach dem zweiten Ausführungsbeispiel Sammelschienen 110 mit einer Breite von 80 mm, in dem Sammelschienenträger 10 nach dem dritten Ausführungsbeispiel Sammelschienen 110 mit einer Breite von 60 mm und in dem Sammelschienenträger 10 nach dem vierten Ausführungsbeispiel Sammelschienen 110 mit einer Breite von 30 mm fixiert werden. Hierfür können sich die unterschiedlichen Ausführungsbeispiele des Sammelschienenträgers 10 durch die Höhe der Fixierungsabschnitte 68 unterscheiden.

Das Fixierungselement 60 umfasst einen Keilabschnitt 62 . Der Keilabschnitt 62 kann entweder an der Trägerbasis 18 oder an dem Befestigungsbereich 122 anliegen. Der Keilabschnitt 62 kann in der zweiten Position P2 an dem Befestigungsbereich 122 anliegen, um den Sammelschienenträger 10 formschlüssig in dem Befestigungsbereich 122 zu halten. Durch diese Ausgestaltung kann der Sammelschienenträger 10 in einfacher Weise durch den Keilabschnitt 62 in dem Befestigungsbereich 122 vorfixiert werden, bevor das Fixierungselement 60 in die dritte Position P3 überführt wird.

In der dritten Position P3 liegt der Keilabschnitt 62 an dem Befestigungsbereich 122 an, um den Sammelschienenträger 10 kraft- und/oder formschlüssig in dem Befestigungsbereich 122 zu halten. Somit wird eine Endmontage des Sammelschienenträgers 10 in dem Befestigungsbereich 122 erleichtert.

Die Trägerbasis 18 kann eine Gegenfläche 19 umfassen, die komplementär zum Keilabschnitt 62 ausgebildet ist und in der dritten Position P3 an dem Keilabschnitt 62 anliegt. Die Gegenfläche 19 kann windschief zur Erstreckungsrichtung R angeordnet sein, d.h. dass die Erstreckungsrichtung R die Ebene schneidet, in welcher die Gegenfläche 19 verläuft.

Die Trägerbasis 18 kann eine durchgehende Öffnung 16 aufweisen und das Fixierungselement 60 eine Bohrung 64 und eine in der Bohrung 64 aufgenommene und durch die Öffnung 16 geführte Schraube 66 umfassen. Die Öffnung 16 kann sich in Richtung eines Kopfes 67 der Schraube 66 weiten. Die Öffnung 16 kann im Querschnitt triangular oder kegelförmig ausgebildet sein.

Die Öffnung 16 kann eine Senkung 14 umfassen, in welcher ein Kopf 67 der Schraube 66 aufgenommen ist. Die Bohrung 64 kann eine Sackloch-Bohrung sein.

Die Schraube 66 kann ein selbstschneidendes Gewinde umfassen, wobei vorzugsweise die Schraube 66 in einen Anfangsbereich der Bohrung 64 zur Vormontage eingeschraubt ist. Eine solche zur Vormontage eingeschraubte Schraube 66 ist beispielsweise in den Figuren 9 und 26 gezeigt. Ist die Schraube 66 in dieser Weise zur Vormontage eingeschraubt, ermöglicht die sich weitende Öffnung 16, dass das Fixierungselement 60 mit einem gewissen Spiel an der Trägerbasis 18 gehalten werden kann. Somit kann ein Überführen des Fixierungselements 60 von der ersten Position P1 in die zweite Position P2 und von der zweiten Position P2 in die erste Position P1 in einfacher Weise durch manuelles Verschieben des Fixierungselements 60 erfolgen.

Die Anmeldung betrifft ferner Verfahren zur Montage einer Sammelschiene in einen Verteilerschrank 100, umfassend folgende Verfahrensschritte:
a) Bereitstellen eines Verteilerschranks 100, insbesondere eines Niederspannungsverteilerschranks, mit einem wenigstens einen Befestigungsbereich 122 aufweisenden Traggerüst 120;
b) Bereitstellen wenigstens eines Sammelschienenträgers 10;
c) Bereitstellen wenigstens einer Sammelschiene 110;
d) Anlegen des Sammelschienenträgers 10 an den Befestigungsbereich 122; und
e) Einführen der Sammelschiene 110 in den Aufnahmeabschnitt 20.

Während des Einführens der Sammelschiene 110 nimmt das Fixierungselement 60 die zweite Position P2 ein.

Das Verfahren umfasst ferner folgenden weiteren Verfahrensschritt:
f) Bewegen des Fixierungselements 60 in dritte Position P3, um die Sammelschiene 110 in dem Aufnahmeabschnitt 20 zu fixieren.

Das Einführen der Sammelschiene 110 ist in Figur 34 veranschaulicht und kann in der Erstreckungsrichtung R der Sammelschiene 110 erfolgen.

Die Fixierung der Sammelschiene 110 in dem Aufnahmeabschnitt 20 kann durch das Anlegen der Fixierungsfläche 69 an das Teilstück der Sammelschiene 110 erfolgen.

Das Anlegen des Sammelschienenträgers 10 kann derart erfolgen, dass das Fixierungselement 60 zu einer Mittellinie M des Verteilerschranks 100 weisend angeordnet ist.

Vor dem Anlegen des Sammelschienenträgers 10 an den Befestigungsbereich 122 kann das Fixierungselement 60, vorzugsweise manuell in die erste Position P1 verschoben werden. Durch das Verschieben des Fixierungselements 60 in die erste Position P1 kann der Keilabschnitt 62 des Fixierungselements 60 nach unten gedrückt werden und gegebenenfalls die Fixierungsabschnitte 68 nach vorne aus der Trägerbasis 18 hervorragen, wie insbesondere in Figur 3 gezeigt. Der nach unten gedrückte Keilabschnitt 62 ermöglicht es, den Keilabschnitt 62 zusammen mit dem Befestigungsabschnitt 40 durch die Befestigungsöffnung zu führen. Das Anlegen des Sammelschienenträgers 10 an den Befestigungsbereich 122 ist insbesondere in Figur 30 gezeigt.

Die Sammelschiene 110 kann kraftschlüssig in dem Aufnahmeabschnitt 20 fixiert werden.

Durch das Bewegen des Fixierungselements 60 in die dritte Position P3 kann zugleich ein kraft- und/oder formschlüssiges Halten des Sammelschienenträgers 10 in dem Befestigungsbereich 122 bewirkt werden. Dabei kann das Fixierungselement 60 und insbesondere der Keilabschnitt 62 an dem Befestigungsbereich 122 bzw. an der Befestigungsöffnung zur Anlage gebracht werden.

Nach dem Anlegen des Sammelschienenträgers 10 an den Befestigungsbereich 122 und vor dem Einführen der Sammelschiene 110 in den Aufnahmeabschnitt 20 kann das Fixierungselement 60 in die zweite Position P2 bewegt werden, wobei vorzugsweise dabei der Sammelschienenträger 10 in dem Befestigungsbereich 122 vorfixiert wird. Das Vorfixieren kann insbesondere durch Anlegen des Keilabschnitts 62 an den Befestigungsbereich 122 erfolgen. Das Vorfixieren des Sammelschienenträgers 10 ist insbesondere in den Figuren 31 bis 33 wiedergegeben.

Durch das Drehen der Schraube 66 des Fixierungselements 60 kann das Bewegen des Fixierungselements 60 in dritte Position P3 bewirkt werden, um die Sammelschiene 110 in dem Aufnahmeabschnitt 20 zu fixieren. Dabei wird durch das Drehen der Schraube 66 das Fixierungselement 60 in Richtung des Schraubenkopfes 67 bewegt. Durch einen durch den Befestigungsbereich 122, bzw. eine Kante der Befestigungsöffnung, oder die Gegenfläche 19 mit dem Keilabschnitt 62 gebildeten Angelpunkt wird das Fixierungselement 60 durch das weitere Drehen der Schraube 66 verschwenkt, wobei während des Verschwenkens die Fixierungsfläche 69, insbesondere eine Fase der Befestigungsfläche 69 bereits in Berührung mit der Sammelschiene 110 gelangen kann. Nach dem Verschwenken wird durch ein weiteres Drehen der Schraube 66 das Fixierungselement 60 in die dritte Position P3 überführt. Dabei drückt die Gegenfläche 19 das Fixierungselement 60 derart in Richtung der Sammelschiene 110, das die Fixierungsfläche 69 auf das Teilstück der Sammelschiene 110 gedrückt wird. In der dritten Position P3 kann der Keilabschnitt 62 parallel zur Gegenfläche 19 verlaufen und/oder an dieser Anliegen. Das Drehen der Schraube 66 ist insbesondere in Figur 35 gezeigt.

## Patentansprüche

1. Sammelschienenträger für einen Verteilerschrank (100), insbesondere einen Niederspannungsverteilerschrank, mit einer Trägerbasis (18), die wenigstens einen Aufnahmeabschnitt (20) zur Aufnahme eines Teilstücks einer Sammelschiene (110) und einen Befestigungsabschnitt (40) zur Befestigung des Sammelschienenträgers (10) an einem Befestigungsbereich (122) des Verteilerschranks (100) umfasst, **gekennzeichnet durch** ein zumindest teilweise in den Aufnahmeabschnitt (20) hineinragendes Fixierungselement (60) zur Fixierung der Sammelschiene (110), welches zwischen einer ersten Position (P1), in welcher der Sammelschienenträger (10) an den Befestigungsbereich (122) des Verteilerschranks (100) anlegbar ist, einer zweiten Position (P2), in welcher die Sammelschiene (110) in den Aufnahmeabschnitt (20) einführbar ist, und einer dritten Position (P3), in welcher die Sammelschiene (110) durch das Fixierungselement (60) in dem Aufnahmeabschnitt (20) fixierbar ist, relativ zur Trägerbasis (18) bewegbar ist, wobei das Fixierungselement (60) einen an der Trägerbasis (18) anliegenden oder an den Befestigungsbereich (122) des Verteilerschranks (100) anlegbaren Keilabschnitt (62) umfasst, wobei der Keilabschnitt (62) in der dritten Position (P3) an den Befestigungsbereich (122) des Verteilerschranks (100) anlegbar ist, um den Sammelschienenträger (10) kraft- und/oder formschlüssig in dem Befestigungsbereich (122) des Verteilerschranks (100) zu halten.

2. Sammelschienenträger nach Anspruch 1, **dadurch gekennzeichnet, dass** die Sammelschiene (110) in der dritten Position (P3) durch das Fixierungselement (60) kraftschlüssig in dem Aufnahmeabschnitt (20) fixierbar ist.

3. Sammelschienenträger nach einem der Ansprüche 1 oder 2, **dadurch gekennzeichnet, dass** der Keilabschnitt (62) in der zweiten Position (P2) an den Befestigungsbereich (122) des Verteilerschranks (100) anlegbar ist, um den Sammelschienenträger (10) formschlüssig in dem Befestigungsbereich (122) des Verteilerschranks (100) zu halten.

4. Sammelschienenträger nach Anspruch 3, **dadurch gekennzeichnet, dass** der Keilabschnitt (62) zwischen der zweiten Position (P2) und der dritten Position (P3) an der Trägerbasis (18) anliegt oder an den Befestigungsbereich (122) des Verteilerschranks (100) anlegbar ist.

5. Sammelschienenträger nach einem der Ansprüche 1 bis 4, **dadurch gekennzeichnet, dass** das Fixierungselement (60) durch eine kombinierte Translations- und Rotationsbewegung zwischen der zweiten Position (P2) und der dritten Position (P3) verschwenkbar ist.

6. Sammelschienenträger nach einem der Ansprüche 1 bis 5, **dadurch gekennzeichnet, dass** die Trägerbasis (18) eine durchgehende Öffnung (16) aufweist und das Fixierungselement (60) eine Bohrung (64) und eine in der Bohrung (64) aufgenommene und durch die Öffnung (16) geführte Schraube (66) umfasst.

7. Sammelschienenträger nach Anspruch 6, **dadurch gekennzeichnet, dass** sich die Öffnung (16) in Richtung eines Kopfes (67) der Schraube (66) weitet.

8. Sammelschienenträger nach einem der Ansprüche 6 oder 7, **dadurch gekennzeichnet, dass** die Öffnung (16) eine Senkung (14) umfasst, in welcher ein Kopf (67) der Schraube (66) aufgenommen ist.

9. Sammelschienenträger nach einem der Ansprüche 6 bis 8, **dadurch gekennzeichnet, dass** die Bohrung (64) eine Sackloch-Bohrung ist.

10. Sammelschienenträger nach einem der Ansprüche 6 bis 9, **dadurch gekennzeichnet, dass** die Schraube (66) ein selbstschneidendes Gewinde umfasst, wobei vorzugsweise die Schraube (66) in einen Anfangsbereich der Bohrung (64) zur Vormontage eingeschraubt ist.

11. Sammelschienenträger nach einem der Ansprüche 1 bis 10, **dadurch gekennzeichnet, dass** das Fixierungselement (60) wenigstens eine Fixierungsfläche (69) aufweist, die in der dritten Position (P3) an das Teilstück der Sammelschiene (110) anlegbar ist, um die Sammelschiene (110) in der dritten Position (P3) in dem Aufnahmeabschnitt (20) zu fixieren.

12. Verteilerschrank (100), insbesondere Niederspannungsverteilerschrank, mit einem wenigstens einen Befestigungsbereich (122) aufweisenden Traggerüst (120), wenigstens einer Sammelschiene (110) und wenigstens einem Sammelschienenträger (10) nach einem der Ansprüche 1 bis 11, wobei der Sammelschienenträger (10) an dem Befestigungsbereich (122) befestigt ist, wobei das Teilstück der wenigstens einen Sammelschiene (110) in dem Aufnahmeabschnitt (20) aufgenommen ist und wobei das Fixierungselement (60) die dritte Position (P3) einnimmt, den Sammelschienenträger (10) kraft- und/oder formschlüssig in dem Befestigungsbereich des Verteilerschranks (100) hält, und die Sammelschiene (110) in dem Aufnahmeabschnitt (20) fixiert.

13. Verteilerschrank nach Anspruch 12, **dadurch gekennzeichnet, dass** das Traggerüst (120) wenigstens einen Träger (121) umfasst und der Befestigungsbereich (122) durch eine in dem Träger (121) eingebrachte Befestigungsöffnung gebildet ist.

14. Verfahren zur Montage einer Sammelschiene (110) in einen Verteilerschrank (100), umfassend folgende Verfahrensschritte:
a) Bereitstellen eines Verteilerschranks (100), insbesondere eines Niederspannungsverteilerschranks, mit einem wenigstens einen Befestigungsbereich (122) aufweisenden Traggerüst (120);
b) Bereitstellen wenigstens eines Sammelschienenträgers (10) nach einem der Ansprüche 1 bis 11;
c) Bereitstellen wenigstens einer Sammelschiene (110);
d) Anlegen des Sammelschienenträgers (10) an den Befestigungsbereich (122); und
e) Einführen der Sammelschiene (110) in den Aufnahmeabschnitt (20),
**dadurch gekennzeichnet, dass** während des Einführens der Sammelschiene (110) das Fixierungselement (60) die zweite Position (P2) einnimmt, und
**dass** es ferner folgenden weiteren Verfahrensschritt umfasst:
f) Bewegen des Fixierungselements (60) in dritte Position (P3), um die Sammelschiene (110) in dem Aufnahmeabschnitt (20) zu fixieren und den Sammelschienenträger (10) kraft- und/oder formschlüssig in dem Befestigungsbereich des Verteilerschranks (100) zu halten.

15. Verfahren nach Anspruch 14, **dadurch gekennzeichnet, dass** die Sammelschiene (110) kraftschlüssig in dem Aufnahmeabschnitt (20) fixiert wird.

16. Verfahren nach einem der Ansprüche 14 bis 15, **dadurch gekennzeichnet, dass** nach dem Anlegen des Sammelschienenträgers (10) an den Befestigungsbereich (122) und vor dem Einführen der Sammelschiene (110) in den Aufnahmeabschnitt (20) das Fixierungselement (60) in die zweite Position (P2) bewegt wird, wobei vorzugsweise dabei der Sammelschienenträger (10) in dem Befestigungsbereich (122) vorfixiert wird, weiterhin vorzugsweise durch Anlegen des Keilabschnitts (62) an den Befestigungsbereich (122) vorfixiert wird.

17. Verfahren nach einem der Ansprüche 14 bis 16, **dadurch gekennzeichnet, dass** der Verfahrensschritt b) Bereitstellen wenigstens eines Sammelschienenträgers nach einem der Ansprüche 6-9 umfasst und dass der Verfahrensschritt f) ferner umfasst, dass das Drehen der Schraube (66) des Fixierungselements (60) das Bewegen des Fixierungselements (60) in dritte Position (P3) bewirkt, um die Sammelschiene (110) in dem Aufnahmeabschnitt (20) zu fixieren.

## Claims

1. Busbar support for a distribution cabinet (100), in particular a low-voltage distribution cabinet, having a support base (18) which comprises at least one receiving section (20) for receiving a part of a busbar (110) and a fixing section (40) for fixing the busbar support (10) to a fixing region (122) of the distribution cabinet (100), **characterised by** a fixing element (60) protruding at least partially into the receiving section (20) for fixing the busbar (110), which is movable between a first position (P1), in which the busbar support (10) is attachable to the fixing region (122) of the distribution cabinet (100), and a second position (P2), in which the busbar (110) is fixed to the fixing region (122) of the distribution cabinet (100), in which the busbar (110) is insertable into the receiving section (20), and a third position (P3) in which the busbar (110) is fixable in the receiving section (20) by a fixing element (60), relative to the support base (18), wherein the fixing element (60) comprises a wedge section (62) adjoining the support base (18) or attachable to the fixing region (122) of the distribution cabinet (100), wherein the wedge section (62) is attachable to the fixing region (122) of the distribution cabinet (100) in the third position (P3) in order to fix the busbar support (10) force-fittingly and/or positively in the fixing region (122) of the distribution cabinet (100).

2. Busbar support according to claim 1, **characterized in that** the busbar (110) is fixable in a force-fitting manner in the receiving section (20) in the third position (P3) by a fixing element (60).

3. Busbar support according to claim 1, **characterized in that** the busbar (110) is attachable to the fixing region (122) of the distribution cabinet (100) by the wedge section (62) in the second position (P2) in order to fix the busbar support (10) positively in the fixing region (122) of the distribution cabinet (100).

4. Busbar support according to claim 3, **characterized in that** the wedge section (62) adjoins the support base (18) between the second position (P2) and the third position (P3) or is attachable to the fixing region (122) of the distribution cabinet (100).

5. Busbar support according to any one of the claims 1 to 4, **characterized in that** the fixing element (60) is pivotable between the second position (P2) and the third position (P3) by a combined translational and rotational movement.

6. Busbar support according to any one of claims 1 to 5, **characterized in that** the support base (18) has a through opening (16) and the fixing element (60) comprises a bore (64) and a screw (66) received in the bore (64) and guided through the opening (16).

7. Busbar support according to claim 6, **characterized in that** the opening (16) expands in the direction of a head (67) of the screw (66).

8. Busbar support according to one of claims 6 or 7, **characterized in that** the opening (16) comprises an indentation (14) in which a head (67) of the screw (66) is received.

9. Busbar support according to any one of the claims 6 to 8, **characterized in that** the bore (64) is a blind bore.

10. Busbar support according to any one of the claims 6 to 9, **characterized in that** the screw (66) comprises a self-tapping thread, wherein preferably the screw (66) is screwed into an initial portion of the hole (64) pre-installing.

11. Busbar support according to any one of claims 1 to 10, **characterized in that** the fixing element (60) has at least one fixing surface (69) which is attachable to the part of the busbar (110) in the third position (P3) in order to fix the busbar (110) in the third position (P3) in the receiving section (20).

12. Distribution cabinet (100), in particular low-voltage distribution cabinet, having a support structure (120) which has at least one fixing region (122), at least one busbar (110) and at least one busbar support (10) according to any one of the claims 1 to 11, wherein the busbar support (10) is fixed to the fixing region (122), wherein the part of the at least one busbar (110) is fixed in the receiving section (20) and wherein the fixing element (60) occupies the third position (P3), fixes the busbar support (10) force-fittingly and/or positively in the fixing region of the distribution cabinet (100) and fixes the busbar (110) in the receiving section (20).

13. Distribution cabinet according to claim 12, **characterized in that** the support structure (120) comprises at least one support (121) and the fixing region (122) is formed by a fixing opening made in the support (121).

14. Method for installing a busbar (110) in a distribution cabinet (100), comprising the following method steps:
a) providing a distribution cabinet (100), in particular a low-voltage distribution cabinet, with a support structure (120) having at least one fixing region (122);
b) providing at least one busbar support (10) according to any one of the claims 1 to 11;
c) providing at least one busbar (110);
d) attaching the busbar support (10) to the fixing region (122); and
e) inserting the busbar (110) into the receiving section (20),
**characterized in that** during the insertion of the busbar (110), the fixing element (60) takes the second position (P2); and
**in that** it further comprises the following further method step:
f) moving the fixing element (60) into the third position (P3) in order to fix the busbar (110) in the receiving section (20) and to fix the busbar support (10) force-fittingly and/or positively in the fixing region of the distribution cabinet (100).

15. Method according to claim 14, **characterized in that** the busbar (110) is fixed in the receiving section (20) in a force-fitting manner.

16. Method according to any one of claims 14 to 15, **characterized in that** after the attaching of the busbar support (10) to the receiving section (20) and before the inserting of the busbar (110) into the receiving section (20), the fixing element (60) is moved to the second position (P2), wherein preferably thereby the busbar support (10) is prefixed in the fixing region (122), further preferably prefixed by attaching the wedge section (62) to the fixing section (122).

17. Method according to any one of the claims 14 to 16, **characterized in that** the method step b) comprises providing at least one busbar support according to any one of claims 6 to 9, and that the method step f) further comprises turning the screw (66) of the fixing element (60) to move the fixing element (60) to third position (P3) to fix the busbar (110) in the receiving section (20).

## Revendications

1. Support de barre omnibus pour une armoire électrique (100), en particulier une armoire électrique basse tension, avec une base de support (18) qui comprend au moins une section de réception (20) pour recevoir une partie d'une barre omnibus (110) et une section de fixation (40) pour fixer le support de barre omnibus (10) à une zone de fixation (122) de l'armoire électrique (100), **caractérisé par** un élément de fixation (60) faisant saillie au moins partiellement dans la section de réception (20) pour fixer la barre de bus (110), qui est mobile entre une première position (P1), dans laquelle le support de barre de bus (10) pouvant être monté sur la région de fixation (122) de l'armoire électrique (100), et une deuxième position (P2), dans laquelle la barre de omnibus (110) est fixée sur la région de fixation (122) de l'armoire électrique (100), dans laquelle la barre omnibus (110) pouvant être insérée dans la section de réception (20), et une troisième position (P3) dans laquelle la barre omnibus (110) pouvant être fixée dans la section de réception (20) par un élément de fixation (60), par rapport à la base de support (18), dans laquelle l'élément de fixation (60) comprend une section de cale (62) adjacente à la base de support (18) ou pouvant être montée sur la zone de fixation (122) de l'armoire électrique (100), dans lequel la section de cale (62) peut être montée dans la troisième position (P3) sur la zone de fixation (122) de l'armoire électrique (100) afin de fixer le support de barre omnibus (10) par friction et/ou par complémentarité de forme dans la zone de fixation (122) de l'armoire électrique (100).

2. Support de barre omnibus suivant la revendication 1, **caractérisé en ce que** la barre omnibus (110) peut être fixée par friction dans la section de réception (20) dans la troisième position (P3) par un élément de fixation (60).

3. Support de barre omnibus suivant la revendication 1, **caractérisé en ce que** la barre omnibus (110) peut être montée dans la zone de fixation (122) de l'armoire électrique (100) par la section de cale (62) dans la deuxième position (P2) afin de fixer le support de barre omnibus (10) par complémentarité de forme dans la zone de fixation (122) de l'armoire électrique (100).

4. Support de barre omnibus suivant la revendication 3, **caractérisé en ce que** la section de cale (62) se raccorde à la base de support (18) entre la deuxième position (P2) et la troisième position (P3) ou peut être montée sur la zone de fixation (122) de l'armoire électrique (100).

5. Support de barre omnibus suivant l'une quelconque des revendications 1 à 4, **caractérisé en ce que** l'élément de fixation (60) est pivotable entre la deuxième position (P2) et la troisième position (P3) par un mouvement combiné de translation et de rotation.

6. Support de barre omnibus suivant l'une quelconque des revendications 1 à 5, **caractérisé en ce que** la base de support (18) présente une ouverture traversante (16) et l'élément de fixation (60) comprend un alésage (64) et une vis (66) reçue dans l'alésage (64) et guidée à travers l'ouverture (16).

7. Support de barre omnibus selon la revendication 6, **caractérisé en ce que** l'ouverture (16) se dilate en direction d'une tête (67) de la vis (66).

8. Support de barre omnibus selon l'une des revendications 6 ou 7, **caractérisé en ce que** l'ouverture (16) comporte un lamage (14) dans lequel est reçue une tête (67) de la vis (66).

9. Support de barre omnibus suivant l'une quelconque des revendications 6 à 8, **caractérisé en ce que** l'alésage (64) est un alésage borgne.

10. Support de barre omnibus selon l'une quelconque des revendications 6 à 9, **caractérisé en ce que** la vis (66) comprend un filetage autotaraudeur, dans lequel de préférence la vis (66) est vissée dans une partie initiale du trou (64) en pré-installation.

11. Support de barre omnibus selon l'une quelconque des revendications 1 à 10, **caractérisé en ce que** l'élément de fixation (60) a au moins une surface de fixation (69) qui peut être montée sur la partie de la barre omnibus (110) dans la troisième position (P3) afin de fixer la barre omnibus (110) dans la troisième position (P3) dans la section de réception (20).

12. Armoire électrique (100), en particulier armoire électrique basse tension, avec une châssis support (120) qui présente au moins une zone de fixation (122), au moins une barre omnibus (110) et au moins un support de barre omnibus (10) selon l'une quelconque des revendications 1 à 11, dans lequel le support de barre omnibus (10) est fixé à la zone de fixation (122), dans lequel la partie de la au moins une barre omnibus (110) est fixée dans la section de réception (20) et dans lequel l'élément de fixation (60) occupe la troisième position (P3), fixe le support de barre omnibus (10) par friction et/ou par complémentarité de forme dans la zone de fixation de l'armoire électrique (100) et fixe la barre omnibus (110) dans la section de réception (20).

13. Armoire électrique suivant la revendication 12, **caractérisée en ce que** le châssis support (120) comprend au moins un support (121) et la zone de fixation (122) est formée par une ouverture de fixation réalisée dans le support (121).

14. Procédé de montage d'une barre omnibus (110) dans une armoire électrique (100), comprenant les étapes de procédé suivantes :
a) fournir une armoire électrique (100), en particulier une armoire électrique basse tension, avec un châssis support (120) ayant au moins une zone de fixation (122) ;
b) fournir au moins un support de barre omnibus (10) selon l'une quelconque des revendications 1 à 11 ;
c) fournir au moins une barre omnibus (110) ;
d) fixer le support de barre omnibus (10) à la zone de fixation (122) ; et
e) insérer la barre omnibus (110) dans la section de réception (20),
**caractérisé en ce que** pendant l'insertion de la barre omnibus (110), l'élément de fixation (60) prend la deuxième position (P2) ; et
**en ce qu'**il comprend en outre l'étape de procédé supplémentaire suivante :
f) déplacer l'élément de fixation (60) dans la troisième position (P3) afin de fixer la barre omnibus (110) dans la section de réception (20) et de fixer le support de barre omnibus (10) par friction et/ou par complémentarité de forme dans la zone de fixation de l'armoire électrique (100).

15. Procédé selon la revendication 14, **caractérisé en ce que** la barre omnibus (110) est fixée dans la section de réception (20) par friction.

16. Procédé selon l'une quelconque des revendications 14 à 15, **caractérisé en ce qu'**après la fixation du support de barre omnibus (10) à la section de réception (20) et avant l'insertion de la barre omnibus (110) dans la section de réception (20), l'élément de fixation (60) est déplacé vers la deuxième position (P2), dans lequel, de préférence, le support de barre omnibus (10) est ainsi préfixé dans la zone de fixation (122), de préférence encore préfixé par la fixation de la section de cale (62) à la section de fixation (122).

17. Procédé selon l'une quelconque des revendications 14 à 16, **caractérisé en ce que** l'étape b) du procédé comprend la fourniture d'au moins un support de barre omnibus selon l'une quelconque des revendications 6 à 9, et **en ce que** l'étape f) du procédé comprend de plus le tournement de la vis (66) de l'élément de fixation (60) pour déplacer l'élément de fixation (60) vers une troisième position (P3) pour fixer la barre omnibus (110) dans la section de réception (20).
